# EUROPÄISCHE PATENTANMELDUNG

(11) **EP 3 001 171 A2**
(43) Veröffentlichungstag der Anmeldung: **30.03.2016**
(21) Anmeldenummer: 15187239.7
(22) Anmeldetag: 29.09.2015
(51) Int. Cl.: G01M 13/04

(54) **BELASTUNGSSTRUKTUR ZUM TESTEN EINER BELASTBARKEIT EINES GROSSLAGERS UND VERFAHREN FÜR EINE BELASTUNGSSTRUKTUR**

(30) Priorität: 29.09.2014 DE 102014219727
(71) Anmelder: Aktiebolaget SKF, 41 550 Göteborg (SE)
(72) Erfinder: Zika, Thomas, 3350 Haag (AT)
(74) Vertreter: Kuhstrebe, Jochen

(57) **Zusammenfassung**

Ausführungsbeispiele beziehen sich auf eine Belastungsstruktur 200 zum Testen einer Belastbarkeit eines Großlagers 210. Die Belastungsstruktur 200 umfasst ein Gehäuse 220 und eine Kraftüberträgerstruktur 230. Die Kraftüberträgerstruktur 230 ist dazu ausgebildet, eine Kraft oder ein Moment relativ zu dem Gehäuse 220 zu erzeugen und auf einen Lagerring 240 des Großlagers 210 zu übertragen. Die Belastungsstruktur 200 umfasst zudem ein mit dem Gehäuse 220 verbundenes Kraftaufnahmeelement 295, welches in Anlage mit einem Gegenring 250 des Großlagers 210 steht. Dabei ist das Gehäuse 220 dazu ausgebildet, den Gegenring 250 derart mittelbar über das Kraftaufnahmeelement 295 abzustützen, dass die Kraft oder das Moment über den Gegenring 250 und das Kraftaufnahmeelement 295 wenigstens teilweise auf das Gehäuse 220 übertragen wird. Dabei weist ein Material des Kraftaufnahmeelements 295 einen höheren Härtegrad auf als ein Material des Gehäuses 220.

## Beschreibung

Vorliegende Ausführungsbeispiele liegen auf dem Gebiet der Belastungsstrukturen zum Testen einer Belastbarkeit eines Großlagers.

In vielen Bereichen der Technik kann es erforderlich werden, Belastungsproben an Bauteilen vorzunehmen, bevor diese in einer Anwendung montiert werden. Dabei kommen Vorrichtungen zum Einsatz, welche je nach späterem Verwendungszweck und Dimensionierung des Bauteils, entsprechende Kräfte aufbringen und diesen entgegenwirken können. Ein möglicher Verwendungsbereich liegt im Bereich der Windenergie. Zu testende Bauteile umfassen beispielsweise Gondeln von Windkraftanlagen, Lageranordnungen oder auch einzelne Großlager. Dabei können jedoch verhältnismäßig große Kräfte frei werden, welche über Strukturen aufgenommen werden, die jedoch unnötig hohe Anforderungen an eine Dimensionierung oder Stabilität eines Fundaments der Vorrichtung stellen können. Dabei kann eine Steifigkeit einzelner Komponenten der Vorrichtung möglicherweise nicht mehr den Anforderungen entsprechen. Ferner kann durch eine verwendete Anordnung der Komponenten ein Testobjekt nur noch schwer zugänglich oder einsehbar sein, was einen Belastungstest verkomplizieren kann. Ferner können durch die Dimensionierung und Stabilitätsanforderungen zusätzliche Kosten entstehen. Diese oder vergleichbare Probleme können sich auch jenseits des Windenergiebereichs bei Belastungsproben von Bauteilen ergeben.

Es ist daher wünschenswert, einen verbesserten Kompromiss aus Bauraumersparnis, Kostenersparnis, Erreichbarkeit eines Testobjekts und Leistung bei einer Belastungsstruktur zu bewirken.

Diesen Anforderungen tragen eine Belastungsstruktur zum Testen einer Belastbarkeit eines Großlagers und ein Verfahren für eine Belastungsstruktur gemäß den unabhängigen Patentansprüchen Rechnung.

Gemäß einem ersten Aspekt beziehen sich Ausführungsbeispiele auf eine Belastungsstruktur zum Testen einer Belastbarkeit eines Großlagers. Die Belastungsstruktur umfasst ein Gehäuse und eine Kraftübelträgerstruktur. Die Kraftübelträgerstruktur ist dazu ausgebildet, eine Kraft oder ein Moment relativ zu dem Gehäuse zu erzeugen und auf einen Lagerring des Großlagers zu übertragen. Die Belastungsstruktur umfasst zudem ein mit dem Gehäuse verbundenes Kraftaufnahmeelement, welches in Anlage mit einem Gegenring des Großlagers steht. Dabei ist das Gehäuse dazu ausgebildet, den Gegenring derart mittelbar über das Kraftaufnahmeelement abzustützen, dass die Kraft oder das Moment über den Gegenring und das Kraftaufnahmeelement wenigstens teilweise auf das Gehäuse übertragen wird. Dabei weist ein Material des Kraftaufnahmeelements einen höheren Härtegrad auf als ein Material des Gehäuses. Hierdurch kann eine Einsparung von Komponenten erreicht werden, welche zusätzlichen Bauraum erfordern können. Dies kann zusätzlich Kosten für eine Herstellung der Belastungsstruktur reduzieren. Mit anderen Worten kann eine kompaktere Bauweise erreicht werden, was möglicherweise zu einer erhöhten Steifigkeit der Struktur führen kann. Durch das Kraftaufnahmeelement kann eine bessere Zugänglichkeit oder Erreichbarkeit eines Testobjekts ermöglicht werden. Somit können ggf. Belastungstests besser überwacht, oder auch zusätzliche Sensorik an dem Testobjekt angebracht werden. Durch den höheren Härtegrad des Materials des Kraftaufnahmeelements kann Verschleiß möglicherweise vermindert werden.

Bei einigen Ausführungsbeispielen umfasst die Kraftüberträgerstruktur ferner eine an den Lagerring angebundene Welle. Die Welle ist dazu ausgebildet, die Kraft oder das Moment in radialer oder axialer Richtung auf den Lagerring zu übertragen. Dies kann einen Belastungstest unter Bedingungen ermöglichen, die bei einem tatsächlichen Einsatz herrschen können, und dabei mehrere Kraftrichtungen umfassen.

Bei einigen Ausführungsbeispielen umfasst das Gehäuse wenigstens drei Bohrungen. Dabei sind die wenigstens drei Bohrungen dazu ausgebildet, ein Befestigungsmittel zum Befestigen des Kraftaufnahmeelements an dem Gehäuse aufzunehmen. Hierdurch kann es möglich sein, eine stabile Fixierung für ein Testobjekt über das Kraftaufnahmeelement zu schaffen, was eine Sicherheit oder Zuverlässigkeit des Testvorgangs erhöhen kann.

Bei manchen Ausführungsbeispielen ist das Kraftaufnahmeelement wenigstens teilringförmig ausgebildet. Damit kann unter Umständen eine gleichmäßigere Aufnahme und Übertragung der erzeugten Kraft auf das Gehäuse durch das Kraftaufnahmeelement bewirkt werden.

Bei einigen Ausführungsbeispielen umfasst die Belastungsstruktur ferner einen Adapterring, welcher einen radialen Einzug aufweist. Der Adapterring ist dazu ausgebildet, die Kraftüberträgerstruktur derart an den Lagerring des Großlagers anzukoppeln, dass der Lagerring mit dem radialen Einzug in Anlage steht. Dies kann bewirken, dass Großlager mit verschiedenen Innen- oder Außenradien an der Belastungsstruktur angebracht und getestet werden können. Mit anderen Worten kann somit eine Anpassung an einen Innen- oder Außenradius des Lagers erfolgen.

Bei manchen Ausführungsbeispielen ist das Gehäuse wenigstens teilweise aus einem Werkstoff gefertigt, dessen Massenanteil an Eisen größer ist als der jedes anderen Elementes. Dies kann eine Verwendung von Werkstoffen erlauben, die eine erhöhte Stabilität oder Strapazierfähigkeit aufweisen.

Gemäß einem weiteren Aspekt beziehen sich Ausführungsbeispiele auf ein Verfahren für eine Belastungsstruktur zum Testen einer Belastbarkeit eines Großlagers. Das Verfahren umfasst ein Erzeugen einer Kraft durch eine Kraftüberträgerstruktur der Belastungsstruktur relativ zu einem Gehäuse der Belastungsstruktur auf einen Lagerring des Großlagers. Das Verfahren umfasst zudem ein Abstützen eines Gegenringes des Großlagers gegen das Gehäuse, mittelbar über ein mit dem Gehäuse verbundenes Kraftaufnahmeelement. Dabei weist ein Material des Kraftaufnahmeelements einen höheren Härtegrad auf als ein Material des Gehäuses. Das Verfahren umfasst ferner ein Übertragen der Kraft über den Gegenring und das Kraftaufnahmeelement wenigstens teilweise auf das Gehäuse. Hierdurch kann eine Einsparung zusätzlicher Komponenten erreicht werden, wodurch sich ein benötigter Bauraum ggf. verringern kann. Dies kann zusätzlich Kosten für eine Herstellung der Belastungsstruktur reduzieren.

Weitere vorteilhafte Ausgestaltungen werden nachfolgenden anhand von in den Zeichnungen dargestellten Ausführungsbeispielen, auf welche Ausführungsbeispiele jedoch nicht beschränkt sind, näher beschrieben. Es zeigen im Einzelnen:
- Fig. 1: eine Vorrichtung zum Testen einer Belastbarkeit eines Großlagers gemäß einem Vergleichsbeispiel;
- Fig. 2: eine Belastungsstruktur zum Testen einer Belastbarkeit eines Großlagers gemäß einem Ausführungsbeispiel; und
- Fig. 3: ein Flussdiagramm eines Verfahrens für eine Belastungsstruktur gemäß einem Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

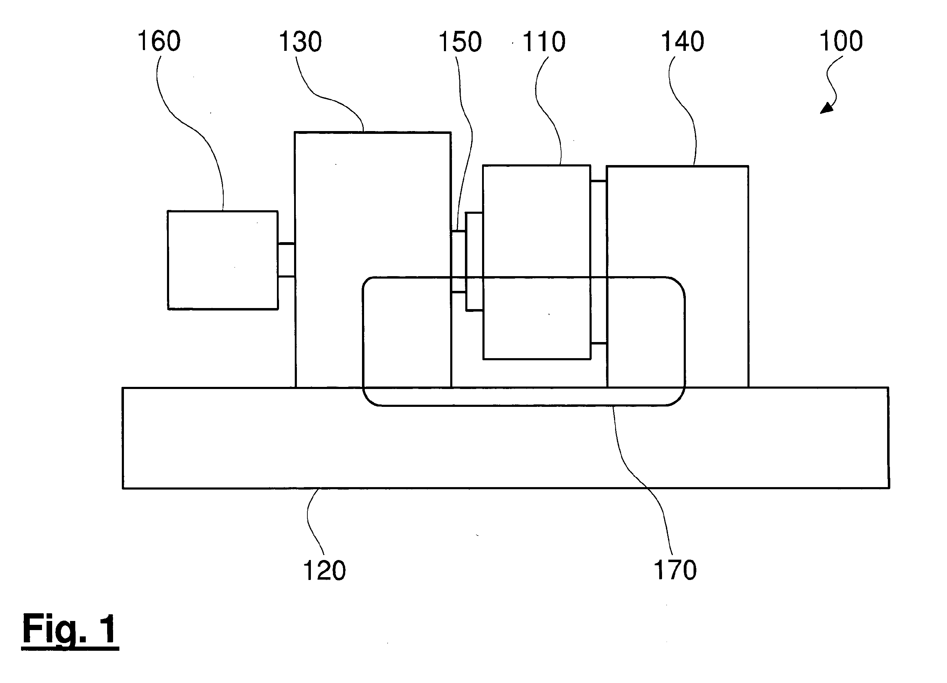

Fig. 1 zeigt eine Vorrichtung 100 zum Testen einer Belastung bei einem Großlager 110 gemäß einem konventionellen Vergleichsbeispiel. Auf einem Fundament 120 sind eine Lasterzeugereinheit 130 und eine Lastreaktionseinheit 140 angebracht. Die Lasterzeugereinheit 130 umfasst eine Welle 150, welche an einem Ende an einen Motor 160 gekoppelt ist, und an einem entgegengesetzten Ende das Großlager 110 trägt. Die Lastreaktionseinheit 140 bindet dabei an das Großlager 110 an.

Die Lasterzeugereinheit 130 kann eine axial oder radial wirkende Kraft oder ein Moment, z.B. Drehmoment auf die Welle ausüben, welche sich auf das Lager 110 überträgt. Zusätzlich kann der Motor 160 das Lager 110 in Rotation versetzen. Die Lastreaktionseinheit 140 kann dabei der Kraft entgegenwirken, oder anders ausgedrückt, einen Widerstand gegen die Kraft bilden, sodass die Kraft wenigstens teilweise als Last auf das Lager 110 wirkt. Dabei wird die Kraft über einen in Form einer geschlossenen Schleife eingezeichneten Kraftübertragungsweg 170 übertragen. Anders ausgedrückt wird die Kraft wenigstens teilweise von der Welle 150, dem Lager 110, der Lastreaktionseinheit 140, dem Fundament und der Lasterzeugereinheit 130 aufgenommen.

Hierbei kann ein solcher Anteil der erzeugten Kraft, welcher auf das Lager 110 wirkt, z.B. wenigstens 4 MN, und ein Drehmoment wenigstens 10 MNm betragen. Dies kann einer zu erwartenden Belastung bei einer Anwendung des Lagers 110 in einer Windkraftanlage entsprechen. Jedoch kann ein Erzeugen eines Kraftwiderstands durch die Lastreaktionseinheit 140 unnötig hohe Anforderungen an eine Stabilität der Vorrichtung 100 oder ihrer Komponenten, z.B. der Lastreaktionseinheit 140, dem Fundament 120 oder der Lasterzeugereinheit 130, stellen. Ferner kann diese Vorrichtung 100 unter Umständen eine mangelhafte Steifigkeit aufweisen, unnötig viel Bauraum beanspruchen oder hohe Fertigungskosten mit sich bringen. Zudem kann das Lager 110 möglicherweise schwer zugänglich oder einsehbar, und damit während eines Tests nur schwer zu überwachen sein.

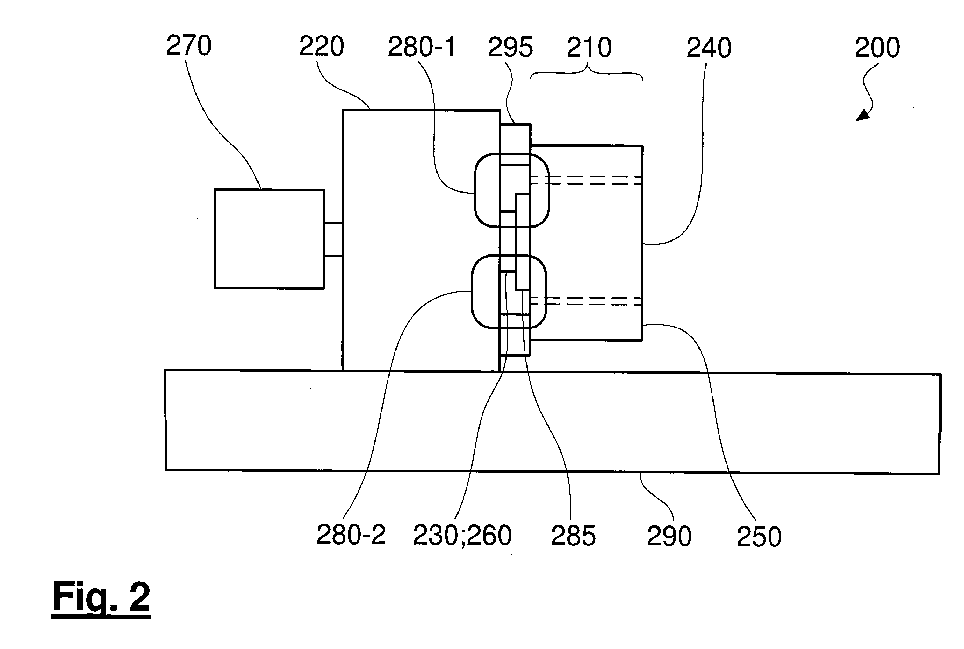

Ausführungsbeispiele können eine Möglichkeit bieten, eine Belastungsstruktur hinsichtlich der genannten Aspekte zu verbessern. Ein Ausführungsbeispiel einer Belastungsstruktur 200 zum Testen einer Belastbarkeit eines Großlagers 210 ist in Fig. 2 gezeigt. Die Belastungsstruktur 200 umfasst ein Gehäuse 220 und eine Kraftüberträgerstruktur 230. Die Kraftüberträgerstruktur 230 ist dazu ausgebildet, eine Kraft oder ein Moment, z.B. Dreh-, Torsions-, Last- oder Biegemoment relativ zu dem Gehäuse 220 zu erzeugen und auf einen Lagerring 240 des Großlagers 210 zu übertragen. Das Gehäuse 220 ist dazu ausgebildet, einen Gegenring 250 des Großlagers 220 derart abzustützen, dass die Kraft oder das Moment über den Gegenring 250 wenigstens teilweise auf das Gehäuse 220 übertragen wird.

Hierdurch kann eine Einsparung von Komponenten erreicht werden, welche zusätzlichen Bauraum erfordern können. Dies kann zusätzlich Kosten für eine Herstellung der Belastungsstruktur 200 reduzieren. Mit anderen Worten kann eine kompaktere Bauweise erreicht werden, was möglicherweise zu einer erhöhten Steifigkeit der Struktur führen kann.

Das Großlager 210 kann beispielsweise ein Gleit- oder Wälzlager sein, welches einen Außendurchmesser von wenigstens 600 mm aufweist. Ferner können Großlager einen Durchmesser von bis zu 1500 mm, bis zu 4000 mm, oder sogar mehr, aufweisen. Neben Großlagern kann die Belastungsstruktur 200 ferner dazu ausgebildet sein, eine Belastbarkeit einer Lageranordnung mit einer Mehrzahl von Lagern oder auch z.B. von weiteren Komponenten einer Windkraftanlage, wie beispielsweise einer Gondel, zu testen. Der Lagerring 240 kann z.B. ein Innenring, und der Gegenring 250 ein Außenring sein, oder umgekehrt.

Die Belastungsstruktur 200 kann z.B. einen Prüfstand oder eine Prüfanlage umfassen oder von einer solchen umfasst sein. Eine Belastbarkeit kann beispielsweise durch eine Belastungsgrenze charakterisiert sein. Die Belastungsgrenze kann beispielsweise erreicht sein, sobald durch ein Wirken einer Kraft beispielsweise ein Bruch, Stillstandsmarkierungen, eine Geräuschentwicklung, eine Fehlfunktion (wie z.B. ein Blockieren), Abrieb, oder eine Temperaturentwicklung oberhalb eines vorgegebenen Temperaturgrenzwertes auftritt.

Bei einigen Ausführungsbeispielen umfasst die Kraftüberträgerstruktur 230 ferner eine an den Lagerring angebundene Welle 260. Die Welle 260 ist dazu ausgebildet, die Kraft oder das Moment in radialer oder axialer Richtung auf den Lagerring zu übertragen. Die Belastungsstruktur kann z.B. einen Aktuator oder auch pneumatische oder hydraulische Elemente umfassen, welche eine Kraft zwischen dem Gehäuse 220 und der Kraftüberträgerstruktur 230 aufbringen, und dadurch eine Auslenkung der Welle 260 in radialer oder axialer Richtung bewirken. Hierdurch können zu erwartende Kräfte auf das Großlager 210 simuliert werden, welche im Einsatz bei einem Feldbetrieb beispielsweise durch ein Eigengewicht einer Struktur (z.B. Windturbine) oder eine Umweltbedingung (z.B. frontaler oder seitlich angreifender Wind) entstehen können. Ferner ist die Welle 260 in Fig. 2 an einen Motor 270 gekoppelt, welcher die Welle 260 und somit den Lagerring 240 mit einem vorgegebenen Drehmoment in Rotation versetzen kann. Dabei kann der Motor 270 optional gegen das Gehäuse 220 oder das Fundament 290 abgestützt sein. Dies kann einen Belastungstest unter zu erwartenden Betriebsbedingungen ermöglichen. Die Kraft kann dabei wenigstens 4 MN und bis zu 8 MN, aber auch mehr oder weniger betragen. Das Drehmoment kann beispielsweise in einem Bereich zwischen 10 und 80 MNm liegen.

Die Kraft wird hierbei von der Kraftüberträgerstruktur 230 auf das Großlager 210 übertragen, und von dem mit dem Großlager 210 unmittelbar oder mittelbar in Anlage stehenden Gehäuse 220 aufgenommen. Mit anderen Worten wirkt das Gehäuse 220 der Kraft entgegen. Hierdurch kann ein geschlossener Kraftübertragungsweg 280-1; 280-2 entstehen. Die hier gezeigten Kraftübertragungswege 280-1 und 280-2 stellen beispielhaft zwei mögliche Verläufe dar, die z.B. von einer Auslenkungsrichtung der Welle 260 abhängen können.

Verglichen mit dem Kraftübertragungsweg 170 in Fig. 1 weist der Kraftübertragungsweg 280-1; 280-2 einen kürzeren Verlauf auf. Die Belastungsstruktur 200, oder anders ausgedrückt, eine Anordnung, welche das Gehäuse 220 und die Kraftübelträgerstruktur 230 umfasst, kann dadurch eine intern erzeugte Kraft selbst kompensieren. Dadurch kann eine Lastreaktionseinheit 140, wie sie Fig. 1 zeigt, entfallen. Weiterhin kann ein Verlauf des Kraftübertragungsweges 280-1; 280-2 über ein Fundament 290, welches das Gehäuse 220 trägt, vermieden werden. Das Fundament 290 ist dabei ortsfest, und fest mit dem Gehäuse 220 verbunden. Anders ausgedrückt können Krafteinwirkungen auf das Fundament 290 bis auf ein Eigengewicht der Belastungsstruktur 200 reduziert werden. So können ggf. Anforderungen an die Stabilität des Fundamentes 290 reduziert werden. Durch das Entfallen der Lastreaktionseinheit 140 kann weiterhin Bauraum eingespart werden.

In Fig. 2 ist der Gegenring 250 mittelbar über ein Kraftaufnahmeelement 295 mit dem Gehäuse 220 verbunden. Das Kraftaufnahmeelement 295 ist an einer Außenseite des Gehäuses befindlich. Die Außenseite ist anders ausgedrückt eine einem von dem Gehäuse umschlossenen Volumen abgewandte Seite. Ebenso ist das Großlager 210 an der Außenseite befindlich. Dies kann eine bessere Zugänglichkeit, Einsehbarkeit oder Erreichbarkeit eines Testobjekts, z.B. des Großlagers 210, ermöglichen. Somit können ggf. Belastungstests besser überwacht, oder auch zusätzliche Sensorik an dem Testobjekt angebracht werden. Zusätzliche Sensoren können optional an dem Großlager 210 angebracht sein, beispielsweise ein Dehnungsmessstreifen zum Messen einer Verformung, ein Temperatursensor zum Messen einer Betriebstemperatur des Großlagers (z.B. entstehende Reibungswärme) oder einer Schmiermitteltemperatur, oder auch ein Beschleunigungssensor.

Das Kraftaufnahmeelement 295 kann bei einigen Ausführungsbeispielen aus einem Material gefertigt sein, welches einen höheren Härtegrad als ein Material des Gehäuses 220 aufweist. Das Kraftaufnahmeelement 295 kann ringförmig oder teilringförmig ausgebildet (mit anderen Worten, segmentiert) sein. Zudem kann eine Mehrzahl an Kraftaufnahmeelementen 295 an dem Gehäuse angebracht sein, welche Fixpunkte für eine Anbindung des Gegenrings 250 schaffen. Beispielsweise kann das Gehäuse 220 wenigstens drei Bohrungen umfassen. Die wenigstens drei Bohrungen sind dazu ausgebildet, ein Befestigungsmittel zum Befestigen des Kraftaufnahmeelements 295 an dem Gehäuse aufzunehmen, z.B. eine Schraube, eine Niete oder einen Bolzen, und ggf. ein Gewinde aufweisen. Die so geschaffenen Fixpunkte können somit eine Ebene aufspannen, die eine Angriffsfläche für den Gegenring 210 bei Wirken der Kraft umfasst. Hierdurch kann eine Stabilität der Belastungsstruktur 200 bei einem Test erhöht werden. Die Bohrungen können sich, ausgehend von einer Rotationsachse des Großlagers 210, auf einem gemeinsamen Kreisradius mit Kreismittelpunkt auf selbiger Rotationsachse befinden, und z.B. in äquidistanten Abständen von jeweils 120° zueinander angeordnet sein.

In Fig. 2 umfasst die Belastungsstruktur 200 ferner einen Adapterring 285, welcher einen radialen Einzug aufweist. Der Adapterring 285 ist dazu ausgebildet, die Kraftübelträgerstruktur 230 derart an den Lagerring 240 des Großlagers 210 anzukoppeln, dass der Lagerring 240 mit dem radialen Einzug in Anlage steht. Somit kann eine individuelle Anpassung der Belastungsstruktur 200 auf Testobjekte verschiedener Größen vorgenommen werden. Optional oder alternativ kann ein weiterer Adapterring vorhanden sein, welcher zwischen dem Kraftaufnahmeelement 295 und dem Gegenring 250 angeordnet ist. Dadurch kann beispielsweise ein Unterschied zwischen einer radialen Ausdehnung des Lagerrings 240 und einer radialen Ausdehnung des Gegenrings 250 kompensiert werden.

Das Gehäuse 220 kann wenigstens teilweise aus einem Werkstoff gefertigt sein, dessen Massenanteil an Eisen größer ist als der jedes anderen Elementes. Der Werkstoff kann zusätzlich einen Kohlenstoffanteil von bis zu 2 Prozent aufweisen. Mit anderen Worten kann der Werkstoff eine Legierung, beispielsweise Stahl, sein. Der Werkstoff kann ferner z.B. Nickel, Chrom, Wolfram, Molybdän, Vanadium, Kobalt, Schwefel oder Mangan umfassen. Ferner kann das Gehäuse 220 weitere Werkstoffe, z.B. Beton oder Stahlbeton umfassen.

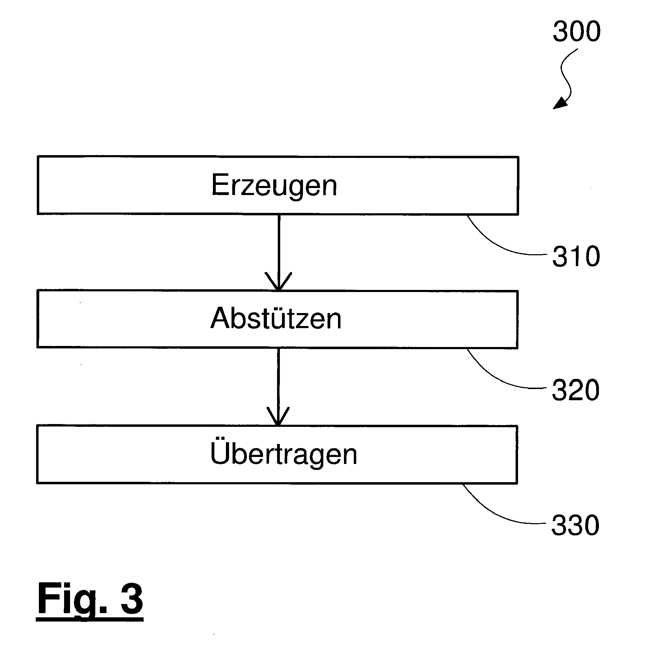

Fig. 3 zeigt ein Ausführungsbeispiel eines Verfahrens 300 für eine Belastungsstruktur zum Testen einer Belastbarkeit eines Großlagers. Das Verfahren 300 umfasst ein Erzeugen 310 einer Kraft durch eine Kraftüberträgerstruktur der Belastungsstruktur relativ zu einem Gehäuse der Belastungsstruktur auf einen Lagerring des Großlagers. Das Verfahren 300 umfasst zudem ein Abstützen 320 eines Gegenringes des Großlagers gegen das Gehäuse, mittelbar über ein mit dem Gehäuse verbundenes Kraftaufnahmeelement. Dabei weist ein Material des Kraftaufnahmeelements einen höheren Härtegrad auf als ein Material des Gehäuses. Das Verfahren 300 umfasst ferner ein Übertragen 330 der Kraft über den Gegenring und das Kraftaufnahmeelement wenigstens teilweise auf das Gehäuse.

Nochmals anders ausgedrückt können Ausführungsbeispiele eine Möglichkeit bieten, eine Belastungsstruktur zum Testen eines Lagers bei einer auf das Lager wirkenden Last herzustellen. Die Belastungsstruktur kann beispielsweise als hydrostatische Rastvorrichtung ausgeführt sein. Hierbei können Bauteile oder Material eingespart werden, da die Belastungsstruktur eine intern erzeugte Kraft auf das Lager selbst wieder aufnehmen kann. Dadurch kann ein Kraftübertragungsweg verkürzt werden. Bei manchen Ausführungsbeispielen wird hierfür ein Kraftaufnahmeelement in Form einer gelochten Scheibe verwendet, welche an das Gehäuse angebunden ist, und mit dem Lager in Anlage steht. Bei einem Test eines Lagers kann dies unter Umständen Kosten sparen. Ferner kann eine Steifigkeit der Belastungsstruktur im Vergleich zu konventionellen Lösungen verbessert werden. Dadurch können Ansteuerelemente zum Erzeugen der Kraft auf das Lager (z.B. Hydraulik, Aktuator, etc.) möglicherweise effizienter betrieben werden. Das zu testende Lager kann dadurch besser einsehbar sein, was z.B. eine Inspektion oder Überwachung bei einem Testvorgang erleichtern kann, oder ein Anbringen zusätzlicher Sensorik an dem Lager ermöglichen kann. Zudem kann ggf. Bauraum reduziert werden. Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

### Bezugszeichenliste

- 100: Vorrichtung
- 110: Großlager
- 120: Fundament
- 130: Lasterzeugereinheit
- 140: Lastreaktionseinheit
- 150: Welle
- 160: Motor
- 170: Kraftübertragungsweg
- 200: Belastungsstruktur
- 210: Großlager
- 220: Gehäuse
- 230: Kraftüberträgerstruktur
- 240: Lagerring
- 250: Gegenring
- 260: Welle
- 270: Motor
- 280-1; 280-2: Kraftübertragungsweg
- 285: Adapterring
- 290: Fundament
- 295: Kraftaufnahmeelement
- 300: Verfahren
- 310: Erzeugen
- 320: Abstützen
- 330: Übertragen

## Patentansprüche

1. Belastungsstruktur (200) zum Testen einer Belastbarkeit eines Großlagers (210) umfassend:
ein Gehäuse (220);
eine Kraftüberträgerstruktur (230), wobei die Kraftüberträgerstruktur (230) dazu ausgebildet ist, eine Kraft oder ein Moment relativ zu dem Gehäuse (220) zu erzeugen und auf einen Lagerring (240) des Großlagers (210) zu übertragen; und
ein mit dem Gehäuse (220) verbundenes Kraftaufnahmeelement (295), welches in Anlage mit einem Gegenring (250) des Großlagers (210) steht, wobei das Gehäuse (220) dazu ausgebildet ist, den Gegenring (250) derart mittelbar über das Kraftaufnahmeelement (295) abzustützen, dass die Kraft oder das Moment über den Gegenring (250) und das Kraftaufnahmeelement (295) wenigstens teilweise auf das Gehäuse (220) übertragen wird, wobei ein Material des Kraftaufnahmeelements (295) einen höheren Härtegrad aufweist als ein Material des Gehäuses (220).

2. Belastungsstruktur (200) gemäß Anspruch 1, wobei die Kraftüberträgerstruktur (230) ferner eine an den Lagerring (240) angebundene Welle (260) umfasst, wobei die Welle (260) dazu ausgebildet ist, die Kraft oder das Moment in radialer oder axialer Richtung auf den Lagerring (240) zu übertragen.

3. Belastungsstruktur (200) gemäß einem der vorangegangenen Ansprüche, wobei das Gehäuse (220) wenigstens drei Bohrungen umfasst, wobei die wenigstens drei Bohrungen dazu ausgebildet sind, ein Befestigungsmittel zum Befestigen des Kraftaufnahmeelements (295) an dem Gehäuse (220) aufzunehmen.

4. Belastungsstruktur (200) gemäß einem der vorangegangenen Ansprüche, wobei das Kraftaufnahmeelement (295) wenigstens teilringförmig ausgebildet ist.

5. Belastungsstruktur (200) gemäß einem der vorangegangenen Ansprüche, ferner umfassend einen Adapterring (285), welcher einen radialen Einzug aufweist, und welcher dazu ausgebildet ist, die Kraftüberträgerstruktur (230) derart an den Lagerring (240) des Großlagers (210) anzukoppeln, dass der Lagerring (240) mit dem radialen Einzug in Anlage steht.

6. Belastungsstruktur (200) gemäß einem der vorangegangenen Ansprüche, wobei das Gehäuse (220) wenigstens teilweise aus einem Werkstoff gefertigt ist, dessen Massenanteil an Eisen größer ist als der jedes anderen Elementes.

7. Verfahren (300) für eine Belastungsstruktur zum Testen einer Belastbarkeit eines Großlagers, umfassend:
Erzeugen (310) einer Kraft oder eines Moments durch eine Kraftüberträgerstruktur der Belastungsstruktur relativ zu einem Gehäuse der Belastungsstruktur auf einen Lagerring des Großlagers;
Abstützen (320) eines Gegenringes des Großlagers gegen das Gehäuse, mittelbar über ein mit dem Gehäuse verbundenes Kraftaufnahmeelement, wobei ein Material des Kraftaufnahmeelements einen höheren Härtegrad aufweist als ein Material des Gehäuses; und
Übertragen (330) der Kraft oder des Moments über den Gegenring und das Kraftaufnahmeelement wenigstens teilweise auf das Gehäuse.
